# EUROPÄISCHE PATENTANMELDUNG

(11) **EP 1 672 352 A1**
(43) Veröffentlichungstag der Anmeldung: **21.06.2006**
(21) Anmeldenummer: 05027339.0
(22) Anmeldetag: 14.12.2005
(51) Int. Cl.: G01N 21/53, G01N 21/59

(54) **Vorrichtung zur Ermittlung der Gemischzusammensetzung beliebiger Medien**

(30) Priorität: 14.12.2004 DE 102004060431
(71) Anmelder: Werne, Walter, 79804 Dogern (DE)
(72) Erfinder: Werne, Walter, 79804 Dogern (DE)
(74) Vertreter: Weiss, Peter

(57) **Zusammenfassung**

Die Erfindung betrifft eine Vorrichtung zur Ermittlung der Gemischzusammensetzung beliebiger Medien bzw. zur Stoffmengenmessung mit einem Sender (1) zum Aussenden von Licht in das Medium und einem Empfänger (8) zur Erfassung des nicht absorbierten bzw. nicht reflektierten Anteils des Lichts, wobei die Leitung des Lichts vom Sender zum Medium und/oder vom Medium zum Empfänger über Lichtleiter, vorzugsweise bestehend aus einem Glasfaserkern (2,7) mit einer Ummantelung (16,22), erfolgt. Enseitig sind an den Lichtleitern vorzugsweise Lichttrichter (4,5,10,19) zur Bündelung des Lichts vorgesehen.

## Beschreibung

Die Erfindung betrifft eine Vorrichtung zur Ermittlung der Gemischzusammensetzung beliebiger Medien bzw. zur Stoffmengenmessung mittels Ermittlung der Absorption eines Lichtes, welches von einem Sender in das Medium ausgesandt und dessen nicht absorbierter bzw. nicht reflektierter Anteil von einem Empfänger erfasst wird.

### STAND DER TECHNIK

In vielen, insbesondere industriellen Breichen ist es notwendig, die Gemischzusammensetzung eines Mediums bzw. die Stoffmenge zu bestimmen. Nur beispielhaft soll auf die Trübungsmessung bei der Wasseraufbereitung, die Bestimmung der Gemischzusammensetzung bei der Lebensmittelindustrie, chemischen und pharmazeutischen Industrie, Papierindustrie, Textilindustrie, beispielsweise den Färbegrad eines Textils, der Getränkeindustrie, dem Bergbau etc. und auf die Stoffmengenmessung beispielsweise bei der Bestimmung von Foliendicken verwiesen werden.

Gegenwärtig kommen im wesentlichen zwei Verfahren zum Einsatz, nämlich das Streulicht- und das Durchlichtmessverfahren. Bei der Trübungsmessung (Turbidimetrie) ist für schwächere Trübungen die Messung der gestreuten Strahlungsleistung (Streulichtverfahren) besser geeignet. Bei dieser Nephelometrie wird Licht in das zu untersuchende Medium eingestrahlt, das an den darin enthaltenen Teilchen gestreut wird. Die Intensität des Streulichtes, das die Messzelle in einen bestimmten Winkel (meist 90°) verlässt, wird mit einer Photodiode gemessen.

Bei stärkeren Trübungen ist dagegen das Durchlichtmessverfahren besser geeignet, das die Schwächung der Strahlungsleistung beim Durchgang durch das Medium photometrisch misst.

Nachteilig bei allen bekannten, auf dem Markt befindlichen Messgeräten ist, dass von keinem gleichzeitig besonders schwach absorbierende, wie besonders stark absorbierende Medien gemessen werden können. Prinzipbedingt lassen sich beispielsweise stark absorbierende Medien nicht mit dem Streulichtverfahren messen, weil das Licht gar nicht mehr in das Medium eindringen kann. Ist andererseits beim Durchlichtmesserverfahren der Abstand zwischen Sender und Empfänger zu gross, führt dies bei sehr stark absorbierenden Medien ebenfalls zu einem Versagen des Messprinzips (bei zu grossem Abstand kommt schlicht kein verwertbares Messignal zustande).

Diese Nachteile werden bereits durch eine Vorrichtung und ein Verfahren vermieden, wie es in der DE 100 23 639 A1 beschrieben ist. Als einziger Nachteil ist hier zu erkennen, dass die Vorrichtung zum grossen Teil selbst in das zu messende Medium eingetaucht werden muss, so dass es zu Abdichtungsproblemen kommen kann. Ferner sind Medien oft sehr aggressiv und greifen die Vorrichtung an. Auch mechanisch unterliegt die Vorrichtung einem erheblichen Verschleiss.

### AUFGABE

Der vorliegenden Erfindung liegt die Aufgabe zugrunde, eine Vorrichtung der o.g. Art zu schaffen, bei der kaum Verschleissprobleme und keine Abdichtungsprobleme auftreten.

### LÖSUNG DER AUFGABE

Zur Lösung der Aufgabe führt, dass die Leitung des Lichtes von einem Sender und/oder zu einem Empfänger zumindest teilweise über einen Lichtleiter erfolgt.

Lichtleiter sind bekannter Massen sehr flexibel, so dass es mit der vorliegenden Erfindung möglich ist, die den Hauptteil der Vorrichtung und insbesondere die Elektronik ausserhalb des zu bestimmenden Mediums anzuordnen, weshalb die Vorrichtung selbst auch keinem Verschleiss durch das Medium unterliegt. Lediglich der Lichtleiter wird in das Medium eingetaucht. Hier braucht aber auf die Abdichtung des Lichtleiters kein grosser Wert gelegt zu werden, da, auch ohne viel Schaden anzurichten, das Medium in den Lichtleiter oder entsprechende Lichttrichter eindringen kann. Wesentlich ist, dass die Elektronik selbst nicht mehr dem Medium ausgesetzt ist. Dabei ist es gleichgültig, ob das Medium flüssig oder gasförmig ist. Insbesondere wenn es sich bei dem Lichtleiter um einen Glasfaserkern handelt, kann das Medium auch Säure sein. Allerdings soll der Erfindungsgedanke nicht darauf beschränkt sein, dass der Lichtleiter aus Glasfasern besteht, denkbar sind auch Kunststoff-Lichtleiter, obwohl hier erhöhte Dämpfungsverluste in Kauf genommen werden müssen.

Den Enden der Lichtleiter können Lichttrichter zugeordnet werden. Bevorzugt geschieht dies bei allen vier Enden, jedoch erfasst die Erfindung auch Lichttrichter an nur einem, zwei oder drei Enden. Der Lichttrichter hat vor allem den Zweck, die Lichtstrahlen auf den Lichtleiter zu fokussieren. Zu diesem Zweck sollte der Glasfaserkern plan mit dem Lichttrichter abschliessen. Ferner ist der Öffnungwinkel des Lichttrichters auf eine optimale Bündelwirkung des Lichtes auf den Glasfaserkern abgestimmt.

Der Lichttrichter selbst kann eine innere, glatte, spiegelnde Oberfläche haben, die jedoch mit der Zeit nicht matt werden darf. Bevorzugt wird er aus einem Metalldrehteil gefertigt, wobei in dieses Drehteil eine trichterförmige Ausnehmung eingebracht und deren Innenfläche glatt poliert wird.

Vom Erfindungsgedanken wird auch umfasst, dass der Lichttrichter aus einem anderen Material gefertigt ist. In diesem Fall kann die reflektierende Oberfläche beispielsweise durch ein Aufdampfen von Metall bzw. ein Versilbern hergestellt werden.

Bei einem anderen Ausführungsbeispiel der Erfindung ist auch daran gedacht, den Lichttrichter aus einem Glas-Konus herzustellen. Dieser wird dann aussen verspiegelt und sodann lackiert, so dass kein Licht nach aussen dringen kann. Die beiden Kreisflächen werden geschliffen und poliert. Der Glasfaserkern steht direkt auf der kleineren Kreisfläche auf, wodurch Justierprobleme entfallen.

Der Vorteil dieses Glas-Konus liegt femer darin, dass der Verspiegelungsgrad konstant bleibt, da keine Verschmutzung stattfindet. Ferner kann beim optischen Sender der verspiegelte Glaskörper vergrössert werden, um mehr Licht sammeln zu können. Somit wird eine höhere Lichtleistung im Glasfaserkabel erreicht.

Die oben beschriebenen Lichttrichter sind jedoch nicht unbedingt notwendig. Insbesondere bei sehr durchsichtigen Medien können sie sich sogar störend auswirken, da das Licht zu weit gestreut wird. Liegt dagegen eine Stimfläche des Lichtleiters direkt der Stirnfläche des anderen Lichtleiters gegenüber, so können auch minimaler Unterschiede in dem Medium erkannt werden.

Die Vorteile der vorliegenden Erfindung liegen, wie oben erwähnt, vor allem darin, dass die Messelektronik weit ab vom Messeinsatz platziert werden kann, Probleme der Abdichtung entfallen. Ferner entfällt eine aufwendige Verkabelung. Störeinkuppelungen in das Kabel entfallen ebenfalls. Die Messköpfe können klein und universell anpassbar an die Anwendung ausgestaltet werden.

Mit der vorliegenden Vorrichtung lässt sich vor allem auch ein neues, erfindungsgemässes Verfahren durchführen, bei dem verschieden farbiges Licht in das zu bestimmende Medium eingebracht wird. Durch dieses verschieden farbige Licht können unterschiedliche Rückstandsfarben erfasst und bestimmt werden. Hierdurch kann nicht nur eine Mengenmessung stattfinden, sondern es kann auch die Art von Rückständen in dem Medium bestimmt werden. Dies ist ein weiterer wesentlicher Vorteil.

Ein weiterer Gedanken der vorliegenden Erfindung betrifft das Eichen. Es ist von grundlegende Bedeutung, dass bei einem vorgegebenen Abstand des Ausgangs des Glasfaserkerns des Senders von dem Eingang des Glasfaserkerns des Empfängers und bei einer bestimmten Trübung ein bestimmtes Signal erzeugt wird, welches als Grundsignal für die anschließenden Messungen betrachtet werden kann. Zum Zwecke einer solchen Eichung ist vorgesehen, dass der Glasfaserkern des Senders in einen Kanal einer Führung eingeschoben wird, welche in einem vorgegebenen Abstand vor dem Eingang des Glasfaserkerns zum Empfänger endet.

Diese Einrichtung wird sodann in einer Eichflüssigkeit gehalten, deren Trübung bekannt ist, Ebenso gut ist es möglich, zwischen den Ausgang und den Eingang eine im wesentlichen durchsichtige Scheibe mit einer vorbestimmten Trübung einzuschieben. Das Licht, welches durch diese Eichflüssigkeit hindurchdringt, muss dann ein vorbestimmtes Signal erzeugen oder die Vorrichtung muss nachjustiert werden.

Es versteht sich von selbst, dass diese Einrichtung auch als Vorrichtung zur Ermittlung der gemischte Zusammensetzung selbst verwendet werden kann. Vor allem in diesem Fall kann es notwendig werden, den Ausgang vom Sender bzw. den Eingang zum Empfänger von Zeit zu Zeit zu reinigen, da sich auf diesen Flächen Ablagerungen niederschlagen können. Das Gleiche gilt auch für Glasscheiben oder dergleichen, welche dem Eingang bzw. dem Ausgang vorgesetzt werden.

Zum Reinigen von diesen Flächen bietet sich ein Wischer an, der motorisch oder von Hand betätigt werden kann. Ist dieser Wischer nur von einer Seite her zugänglich, so kann die Bewegung des Wischers mit Hilfe von Magneten erfolgen, so dass eine Bewegung auch durch eine Wand hindurch bewirkt werden kann.

Die Verwendung von beispielsweise Glasfasern als Lichtleiter hat auch den besonderen Vorteil, dass beispielsweise einige dieser Fasern aus dem Glasfaserkern abgekoppelt und deren Licht zum Empfänger geleitet werden kann. Hierdurch kann auf einfache Art und Weise die Intensität, Qualität und auch Farbe des ausgesandten Lichtes bestimmten werden, so dass der Empfänger darauf ausgelegt werden kann.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung, diese zeigt in
Figur 1 eine schematische Draufsicht auf eine erfindungsgemässe Vorrichtung zur Ermittlung der Gemischzusammensetzung beliebiger Medien;
Figur 2 eine Draufsicht auf ein Ausführungsbeispiel eines Lichttrichters;
Figur 3 eine Frontansicht des Lichttrichters gemäss Figur 2;
Figur 4 eine Draufsicht auf ein weiteres Ausführungsbeispiels eines Lichttrichters;
Figur 5 einen Längsschnitt durch eine erfindungsgemässe Einrichtungen zum Eichen der Vorrichtung gemäß Figur 1.

Eine erfindungsgemässe Vorrichtung zur Ermittlung der Gemischzusammensetzung beliebiger Medien weist einen optischen Sender 1 auf, der ein Licht durch einen Glasfaserkern 2 zu einem Ausgang 3 übermittelt. Dieser Ausgang 3 befindet sich in einem Lichttrichter 4.

Gegenüber von diesem Lichttrichter 4 ist ein Aufnahmetrichter 5 erkennbar, in welchem sich ein Eingang 6 eines weiteren Glasfaserkerns 7 befindet. Dieser Glasfaserkern 7 steht mit einem optischen Empfänger 8 in Verbindung.

Optischer Sender 1 und optischer Empfänger 8 sind bevorzugt an einer Gehäusewand 9 einer entsprechenden Geräteeinheit angeordnet und können sich ausserhalb des zu bestimmenden Mediums befinden. Hierzu ist der optische Sender über einen Lichttrichter 10 an eine Innenwand 11 der Gehäusewand 9 angesetzt, wobei zwischen den Lichttrichter 10 und den optischen Sensor 1 noch eine Streuscheibe 12 eingeschaltet werden kann. Im Inneren des Lichttrichters 90 befindet sich an dessen Ende ein Eingang 13 zu dem Glasfaserkern 2.

An einer Aussenwand 4 der Gehäusewand 9 ist ein Befestigungsflansch 15 festgelegt. Dieser Befestigungsflansch 15 wird von dem Glasfaserkern 2 durchzogen, wobei der Glasfaserkern 2 bzw. dessen Ummantelung 16 über eine Glasfaserendhülse 17 mit dem Befestigungsflansch 15 verbunden ist.

Ähnlich ist auch der optische Empfänger 8 unter Zwischenschaltung einer Streuscheibe 18 über einen Lichttrichter 19 an die Innenwand 11 der Gehäusewand 9 angesetzt. In dem Lichttrichter 19 befindet sich ein Ausgang 20 des empfangenen Lichtes.

An der Aussenwand 14 sitzt ein Befestigungsflansch 21, an dem eine Ummantelung 22 des Glasfaserkerns 7 über eine Glasfaserendhülse 23 festgelegt ist.

Die Lichttrichter 4, 5 bestehen jeweils aus einem Drehteil 24, in welches eine trichterförmige Ausnehmung 25 eingeformt ist. Dieser trichterförmigen Ausnehmung 25 ist eine Glasscheibe 26 vorgesetzt. An dem Boden der trichterförmigen Ausnehmung 25 befindet sich der Ausgang 3 bzw. Eingang 6.

### Die Funktionsweise der vorliegenden Erfindung ist folgende:

Lichttrichter 4 und Aufnahmetrichter 5 werden voneinander beabstandet in ein zu bestimmendes Medium eingesetzt. Dieses Medium befindet sich zwischen den beiden Glasscheiben von Lichttrichter 4 und Aufnahmetrichter 5. Ein Abstand zwischen Lichttrichter 4 und Aufnahmetrichter 5 kann durch entsprechende Abstandshalter festgelegt werden.

Nunmehr wird Licht von dem optischen Sender 1 ausgesandt und durch den Glasfaserkern 2 zu dem Ausgang 3 geschickt. Das Licht durchstrahlt das zu bestimmende Medium zwischen den beiden Glasscheiben 26 und gelangt in die trichterförmige Ausnehmung des Aufnahmetrichters 5 zu dem Eingang 6. Von dort wird es über den Glasfaserkern 7 zu dem Ausgang 20 des Lichttrichters 19 weitergeleitet und von dem optischen Empfänger 8 aufgenommen. Die Auswertung geschieht dort z.B. entsrpechend der DE 100 23 639 A1,

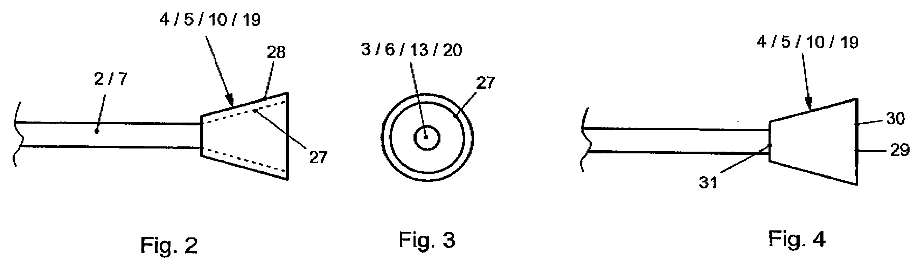

In Figur 2 wird ein Ausführungsbeispiel eines Licht- bzw. Aufnahmetrichters 4, 5, 10 bzw. 19 gezeigt. Dabei ist eine glatte innere Trichterfläche 27 verspiegelt oder poliert, versilbert oder mit einer Metalloberfläche bedampft. Wesentlich ist allein, dass eine ausreichende Lichtreflektion erfolgt.

Denkbar ist auch, dass es sich um eine durchsichtige Trichterwand handelt, deren Aussenfläche 28 entsprechend verspiegelt, poliert oder versilbert ist.

Gemäss Figur 4 besteht ein Trichter 4/5/10/19 aus einem einstückigen Glaskonus 29, dessen beide Kreisflächen 30 und 31 glatt geschliffen sind. Der Glasfaserkern 2/7 steht direkt an der kleineren Kreisfläche 31 an, so dass hier Justierprobleme entfallen.

Der Glaskonus 29 ist auf seiner Oberfläche verspiegelt und dann lackiert.

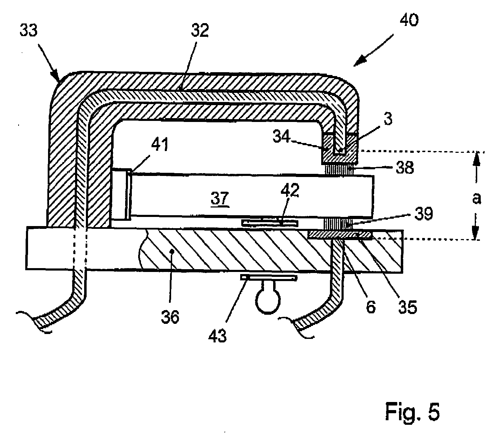

In Figur 5 ist eine Einrichtung zum Eichen der erfindungsgemäßen Vorrichtung dargestellt. Hierbei wird der Glasfaserkern 2 in einen Kanal 32 einer Führung 33 eingeschoben, sodass der Ausgang 3 einen definierten Abstand a vom Eingang 6 des Glasfaserkerns 7 einhält. Dem Ausgang 3 ist ein aufgeklebter Glaszylinder 34 vorgesetzt, dem Eingang 6 eine Glasscheibe 35. Die Glasscheibe 35 befindet sich in einer Tragplatte 36, auf der auch die Führung 33 aufgesetzt ist.

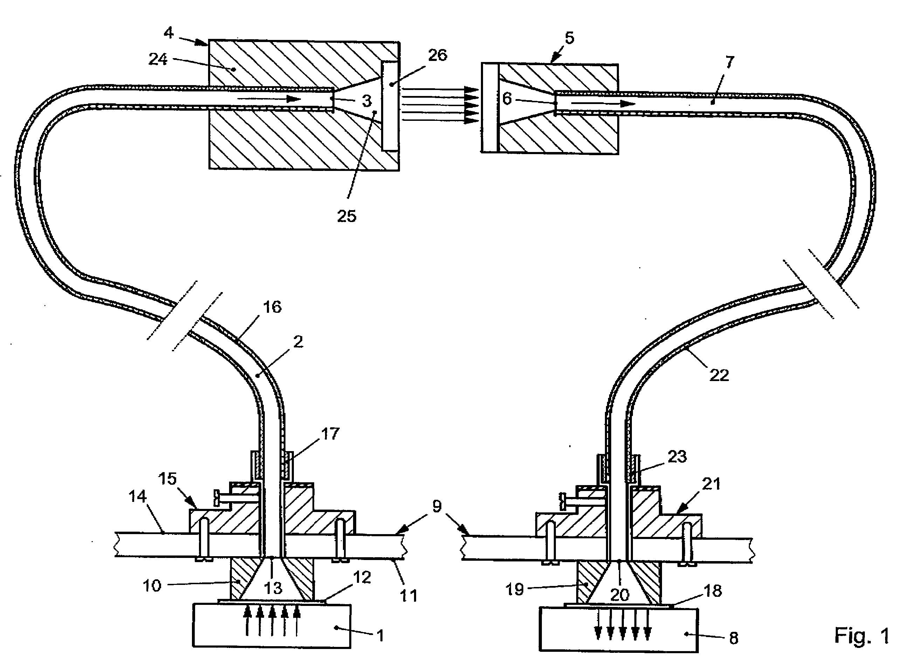

Zum Eichen der Vorrichtung wird nun diese Einrichtung 40 in eine Eichflüssigkeit eingesetzt oder zwischen den Glaszylinder 34 und die Glasscheibe 35 wird eine Scheibe mit einer definierten Trübung eingeschoben. Über die Erkennung dieser Trübung bei einem vorbestimmten Abstand a kann die Vorrichtung, die in Figur 1 gezeigt ist, geeicht werden.

In Figur 5 ist zusätzlich die Möglichkeit dargestellt, sowohl den Glaszylinder 34 als auch die Glasscheibe 35 zu reinigen, sofern sich dort Ablagerungen ansetzen sollten. Hierzu befinden sich an einem Wischer 37 Borstenreihen 38 und 39, welche jeweils dem Glaszylinder 34 bzw. der Glasscheibe 35 zugewandt sind.

Der Wischer 37 selbst ist über ein Scharnier 41 mit der Führung 33 verbunden und dreht um dieses Scharnier 41. Hierbei bestreichen die Borstenreihen 38 und 39 den Glaszylinder 34 bzw, die Glasscheibe 35.

Die Bewegung des Wischers 37 erfolgt induktiv. Hierzu ist an dem Wischer 37 ein Magnet 42 befestigt, dem andererseits der Tragplatte 36 ein von Hand bewegbarer Magnet 43 zugeordnet ist. Wird dieser Magnet 43 entlang der Tragplatte 36 bewegt, so folgt ihm der Magnet 42 und mit diesem der Wischer 37.

| **Bezugszeichenliste** | | | | | |
|---|---|---|---|---|---|
| 1 | optischer Sender | 34 | Glaszylinder | 67 | |
| 2 | Glasfaserkern | 35 | Glasscheibe | 68 | |
| 3 | Ausgang | 36 | Tragplatte | 69 | |
| 4 | Lichttrichter | 37 | Wischer | 70 | |
| 5 | Aufnahmetrichter | 38 | Borstenreihe | 71 | |
| 6 | Eingang | 39 | Borstenreihe | 72 | |
| 7 | Glasfaserkern | 40 | Einrichtung | 73 | |
| 8 | optischer Empfänger | 41 | Scharnier | 74 | |
| 9 | Gehäusewand | 42 | Magnet | 75 | |
| 10 | Lichttrichter | 43 | Magnet | 76 | |
| 11 | Innenwand | 44 | | 77 | |
| 12 | Streuscheibe | 45 | | 78 | |
| 13 | Eingang | 46 | | 79 | |
| 14 | Aussenwand | 47 | | | |
| 15 | Befestigungsflansch | 48 | | a | Abstand |
| 16 | Ummantelung | 49 | | | |
| 17 | Glasfaserendhülse | 50 | | | |
| 18 | Streuscheibe | 51 | | | |
| 19 | Lichttrichter | 52 | | | |
| 20 | Ausgang | 53 | | | |
| 21 | Befestigungsflansch | 54 | | | |
| 22 | Ummantelung | 55 | | | |
| 23 | Glasfaserendhülse | 56 | | | |
| 24 | Drehteil | 57 | | | |
| 25 | Ausnehmung | 58 | | | |
| 26 | Glasscheibe | 59 | | | |
| 27 | innere Oberfläche | 60 | | | |
| 28 | Aussenfläche | 61 | | | |
| 29 | Glas-Konus | 62 | | | |
| 30 | Kreisfläche | 63 | | | |
| 31 | Kreisfläche | 64 | | | |
| 32 | Kanal | 65 | | | |
| 33 | Führung | 66 | | | |

## Patentansprüche

1. Vorrichtung zur Ermittlung der Gemischzusammensetzung beliebiger Medien bzw. zur Stoffmengenmessung mittels Ermittlung der Absorption eines Lichtes, welches von einem Sender (1) in das Medium ausgesandt und dessen nicht absorbierter bzw. nicht reflektierter Anteil von einem Empfänger (8) erfasst wird,
**dadurch gekennzeichnet,**
**dass** die Leitung des Lichtes von einem Sender (1) und/oder zu einem Empfänger (8) zumindest teilweise über einen Lichtleiter (2, 7) erfolgt.

2. Vorrichtung nach Anspruch 1, **dadurch gekennzeichnet, dass** der Lichtleiter einen Glasfaserkern (2, 7) in einer Ummantelung (16, 22) aufweist.

3. Vorrichtung nach Anspruch 1 oder 2, **dadurch gekennzeichnet, dass** der Lichtleiter (2, 7) einends mit einem optischen Sender (1) bzw. einem optischen Empfänger (8) für Licht mit anschliessender Auswerteeinheit in Verbindung steht.

4. Vorrichtung nach Anspruch 3, **dadurch gekennzeichnet, dass** zwischen Lichtleiter (2, 7) und optischem Sender (1) bzw. Empfänger (8) für Licht ein Lichttrichter (10, 19) vorgesehen ist.

5. Vorrichtung nach wenigstens einem der Ansprüche 1 bis 4, **dadurch gekennzeichnet, dass** dem freien Ende von zumindest einem Lichtleiter (2, 7) ein Lichttrichter (4, 5) aufgesetzt ist.

6. Vorrichtung nach Anspruch 4 oder 5, **dadurch gekennzeichnet, dass** der Öffnungswinkel des Lichttrichters (4, 5, 10, 19) auf eine optimale Bündelwirkung des Lichtes auf dem Lichtleiter (2, 7) abgestimmt ist.

7. Vorrichtung nach einem der Ansprüche 4 bis 6, **dadurch gekennzeichnet, dass** der Lichttrichter (4, 5, 10, 19) eine spiegelnde Innenfläche (27) besitzt.

8. Vorrichtung nach Anspruch 7, **dadurch gekennzeichnet, dass** die lnnenfiläche (27) durch Aufdampfen von Metall hergestellt ist (z.B. versilbert).

9. Vorrichtung nach einem der Ansprüche 4 bis 6, **dadurch gekennzeichnet, dass** der Lichttrichter (4, 5, 10, 19) aus einem Glaskonus (29) besteht, dessen Aussenfläche verspiegelt und dann lackiert ist.

10. Vorrichtung nach Anspruch 9, **dadurch gekennzeichnet, dass** der Glaskonus (29) beidseits eine bevorzugt geschliffene Kreisfläche (30, 31) aufweist, wobei der Lichtleiter (2, 7) an der kleineren Kreisfläche (31) ansteht.

11. Verfahren zur Ermittlung der Gemischzusammensetzung beliebiger Medien bzw. zur Stoffmengenmessung mittels Ermittlung der Absorption eines Lichtes, welches von einem Sender (1) in das Medium ausgesandt und dessen nicht absorbierter bzw. nicht reflektierter Anteil von einem Empfänger (8) erfasst wird, **dadurch gekennzeichnet, dass** verschieden farbiges Licht zum Erkennen von unterschiedlichen Rückstandsfarben ausgesandt und erfasst wird.

12. Verfahren zum Eichen einer Vorrichtung zur Ermittlung der Gemischzusammensetzung beliebiger Medien bzw. zur Stoffmengenmessung mittels Ermittlung der Absorption eines Lichtes, welches von einem Sender (1) in das Medium ausgesandt und dessen nicht absorbierter bzw. nicht reflektierter Anteil von einem Empfänger (8) erfasst wird, **dadurch gekennzeichnet, dass** ein Ausgang (3) des Senders (1) in einem definierten Abstand (a) von einem Eingang (6) des Empfängers (8) angeordnet und zwischen den Ausgang (3) und den Eingang (6) eine Eichflüssigkeit oder ein Gegenstand mit einer definierten Trübung eingebracht wird.

13. Verfahren nach Anspruch 12, **dadurch gekennzeichnet, dass** der Ausgang (3) und/oder der Eingang (6) oder ein jeweils vorgesetzter Glaszylinder (34) oder eine Glasscheibe (35) gereinigt wird.
